# EUROPÄISCHE PATENTSCHRIFT

(11) **EP 2 067 562 B1**
(45) Veröffentlichungstag und Bekanntmachung des Hinweises auf die Patenterteilung: **28.03.2018**
(21) Anmeldenummer: 07025034.5
(22) Anmeldetag: 21.12.2007
(51) Int. Cl.: B23K 9/32

(54) **Formiervorrichtung sowie Verfahren zum Formieren**
Device and method for welding with back shielding gas
Dispositif et procédé de protection de la base de joints de soudure utilisant un gaz de protection

(30) Priorität: 06.12.2007 DE 102007058804
(43) Veröffentlichungstag der Anmeldung: 10.06.2009
(73) Patentinhaber: Linde AG, 80331 München (DE)
(72) Erfinder: Ammann, Thomas, 81379 München (DE); Dressel, Laurentius, 85301 Schweitenkirchen (DE)
(74) Vertreter: Gellner, Bernd

(56) Entgegenhaltungen:
- WO-A-02/00385
- WO-A1-2007/111453
- JP-A- 8 309 529
- US-A- 5 187 343

## Beschreibung

### Technisches Gebiet

Die vorliegende Erfindung betrifft eine Formiervorrichtung gemäß dem Oberbegriff des Anspruchs 1, sowie ein zugeordnetes Verfahren *gemäß dem Oberbegriff des* Anspruch 8 *(vgl. Druckschrift* WO2007/111453; US 5 187 343 *aus dem Stand der Technik).*

### Stand der Technik

Der Begriff Formieren bezeichnet das Begasen oder das Umspülen der Wurzelseite und der Wärmeeinflusszone eines zu fügenden Bereichs mit mindestens einem Wurzelschutzgas. Hierbei wird als Wurzelseite der dem Fügegerät abgewandte Bereich des zu fügenden Bereichs bezeichnet.
Ferner wird beim Fügen einer Naht in mehreren Lagen die unterste und/oder zuerst gebildete Lage und bei einer nur aus einer Lage gebildeten Naht der vom Fügegerät abgewandte Teilbereich der Naht als Wurzel bezeichnet.

Der Begriff Fügen umfasst im Folgenden insbesondere
- sowohl Schweißen, insbesondere alle Schmelzschweißverfahren, wie ganz besonders Lichtbogenschweißen oder auch Strahlschweißverfahren (und hierbei insbesondere Laserstrahlschweißen)
- als auch Lichtbogenlöten,
- als auch Mischformen aus Schweißen und Löten.
Ferner wird der Begriff Wurzelschutzgas vorliegend sowohl für reine Wurzeischutzgase als auch für Wurzelschutzgasmischungen verwendet.

Als Wurzelschutzgas werden beim Formieren üblicherweise Gase, wie Argon, oder reaktionsträge Gase, wie Stickstoff, sowie Gemische aus Stickstoff und Wasserstoff (Formiergase nach DIN EN 439) oder Argon und Wasserstoff eingesetzt. Hierbei hängt die Wahl des Wurzelschutzgases von den zu verarbeitenden Werkstoffen, von den Bauteilen, von der Art der Wurzelschutzgaszuführung und von den Fügebedingungen ab. Wurzelschutzgase erleichtern eine gute Wurzelbildung der Naht, verbessern die Oberflächenqualität der Wurzel und verhindern Zunderbildung bzw. Anlauffarben im Fügebereich.

Funktion des Wurzelschutzgases beim Formieren ist es, die sauerstoffhaltige Atmosphäre zu verdrängen und eine hochwertige Oberfläche zu erzielen. Bei Fügearbeiten an korrosionsbeständigen Werkstücken, beispielsweise an nichtrostendem Stahl, oxidieren nämlich die Naht und die Nahtzonen bei ungehindertem Zustrom von Luftsauerstoff aufgrund der Fügewärme in Verbindung mit dem Luftsauerstoff und es zeigen sich Anlauffarben.

Weil die Korrosionsbeständigkeit oxidierter Oberflächen stark herabgesetzt ist, ist es beim Fügen von Gegenständen aus nichtrostendem Stahl wichtig, auf ausreichenden Gasschutz zu achten, auch und besonders auf der Wurzelseite. Die vorliegende Erfindung betrifft daher insbesondere den Wurzelschutz beim Fügen von Konstruktionen aus nichtrostendem Stahl, vornehmlich beim Fügen von Rohrleitungen aus nichtrostendem Stahl. Aber auch ein Wurzelschutz bei anderen Werkstoffen wird von der vorliegenden Erfindung betroffen.

Mittels Formieren werden die Bildung von Anlauffarben sowie ein Oxidieren im zu fügenden Bereich durch den Einsatz von Wurzelschutzgas, gegebenenfalls in Verbindung mit einer technischen Vorrichtung, einer sogenannten Formiervorrichtung, verhindert. Formiervorrichtungen zum Fügen von Rohrleitungen gemäß dem Stand der Technik sind beispielhaft in Fig. 3, in Fig. 4 und in Fig. 5 dargestellt.

Diese bekannten Formiervorrichtungen bringen das Wurzelschutzgas üblicherweise durch geeignete Anordnung von Dichtlippen und Diffusoren innerhalb des Rohrs direkt an die Fügestelle und halten den Luftsauerstoff fern. Beim Schweißen von Rohrleitungen aus nichtrostendem Stahl werden Formiervorrichtungen eingesetzt, um einen kurzen Abschnitt des Rohrs abzusperren und mit dem Wurzelschutzgas zu füllen, wodurch eine unerwünschte wurzelseitige Nahtoxidation vermieden bzw. zumindest verringert wird und Anlauffarben unterbunden werden.

Hauptvorteile der Formiervorrichtung sind Gaseinsparung und effektiverer Nahtschutz. Um korrosionsbeständige Fügenähte zu erreichen, wird der Restsauerstoffgehalt an der Wurzelseite vorzugsweise auf bis zu maximal etwa dreißig Teile pro Million (ppm) reduziert.

Konventionelle Formiervorrichtungen sind beispielsweise im DVS-Merkblatt 0937, "Wurzelschutz beim Schutzgasschweißen", DVS-Verlag, Düsseldorf 1990, beschrieben. Weitere Informationen zu Formiervorrichtungen bieten die Firmen Ind. Schweißtechnik E. Jankus GmbH, Holzwickede (DE), und Walter Schnorrer, Aalborg (DK), im Rahmen ihres jeweiligen Internetauftritts unter http://www.ja-online.de/ bzw. unter http://www.schnorrer.dk/ an. Ferner ist eine konventionelle Formiervorrichtung beispielsweise in der Druckschrift DE 20 2005 021 175 U1 aus dem Stand der Technik offenbart.

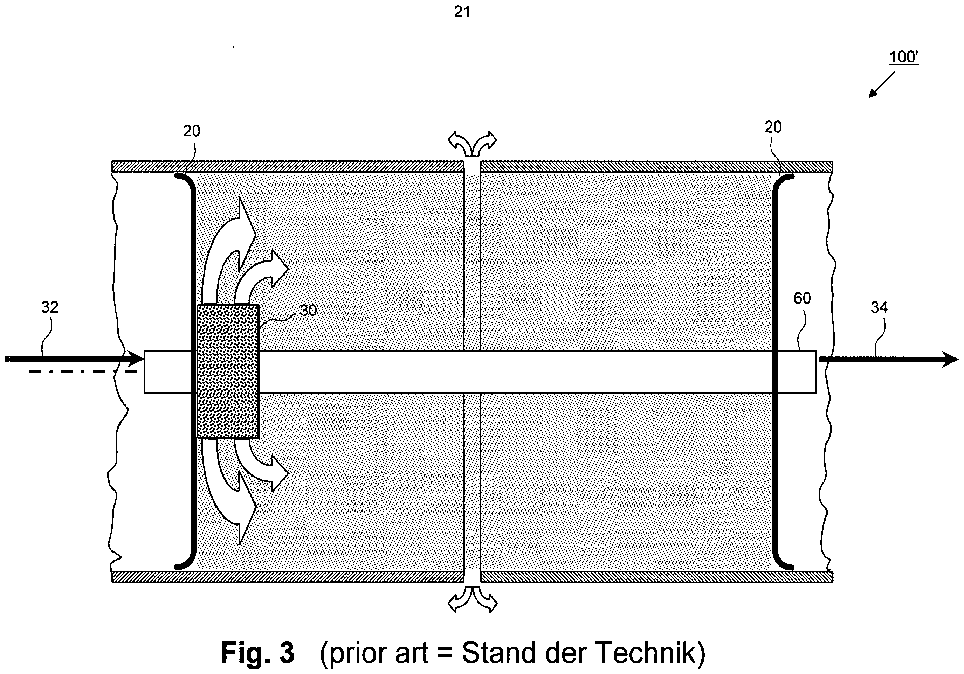

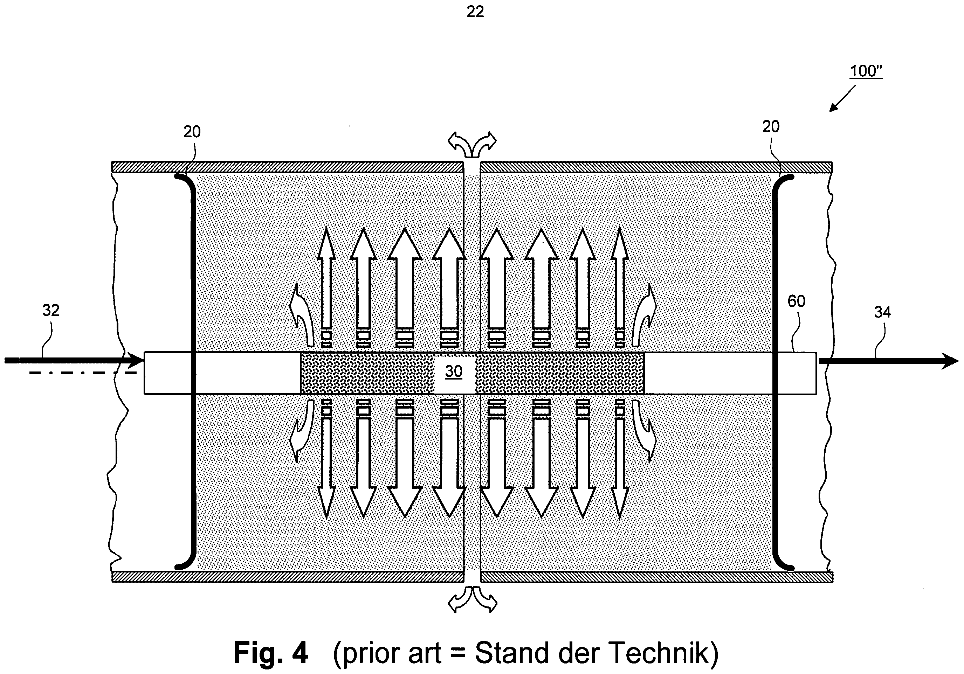

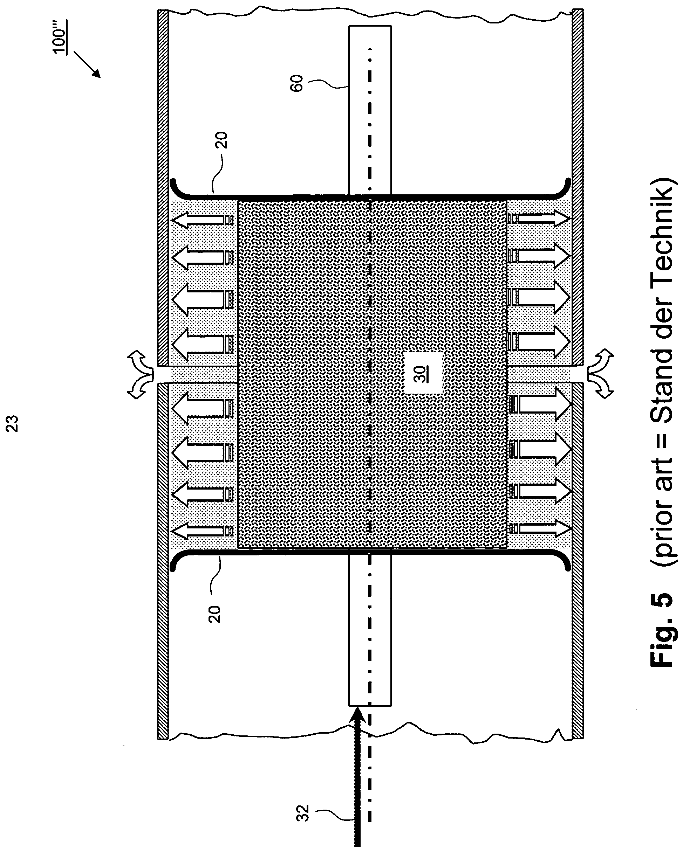

Konventionelle Formiervorrichtungen beruhen auf zwei verschiedenen Prinzipien: Entweder wird der zu spülende Raum komplett mit Wurzelschutzgas geflutet (vgl. Fig. 3), wobei geringe Strömungsgeschwindigkeiten vorherrschen, oder es wird die Naht direkt radial angeblasen (vgl. Fig. 4 und Fig. 5). Damit wird zwar die Reduktion des Sauerstoffgehalts auf das erforderliche Maß direkt an der Naht gewährleistet, jedoch zeigen sich an den Verbindungen oft noch Verfärbungen.

Bei Verwendung einer konventionell strömenden Formiervorrichtung entstehen beim Fügen keine Anlauffarben im eigentlichen Sinne; es wird also die Bildung von Chromoxide wirkungsvoll unterbunden. Allerdings können trotz niedrigstem Sauerstoffgehalt gelblich-braune Verfärbungen auftreten, deren Ursache bislang weitgehend unbekannt ist.

Charakteristisch für diese Verfärbungen ist, dass sie vorwiegend neben der Naht und gelegentlich auch auf der Naht auftreten. Selbst bei im technischen Sinne perfekter Formierung, also bei 0 ppm Restsauerstoffgehalt, sind diese Verfärbungen möglich. Chromoxide, also Anlauffarben im eigentlichen Sinne, ergeben dagegen eine Abfolge von Farben, die bereits auf der Nahtraupe selbst beginnt, und entstehen immer unter dem Einfluss von Sauerstoff, CO₂ oder Feuchte. Diese Verfärbungen bzw. Beläge beeinträchtigen das Fügeergebnis und können je nach Anforderung zu Reklamationen führen.

### Darstellung der vorliegenden Erfindung: Aufgabe, Lösung, Vorteile

Ausgehend von den vorstehend dargelegten Nachteilen und Unzulängüchkeiten sowie unter Würdigung des umrissenen Standes der Technik liegt der vorliegenden Erfindung die Aufgabe zugrunde, eine Formiervorrichtung der eingangs genannten Art sowie ein Verfahren der eingangs genannten Art so weiterzubilden, dass die Wurzelschutzgasströmung so nahe am zu fügenden Bereich, insbesondere so nahe an der zu fügenden Rohrwand, vorbei gelenkt wird, dass Verfärbungen sowie Belagbildungen am zu fügenden Gegenstand in effektiver Weise verhindert werden.

Diese Aufgabe wird durch eine Formiervorrichtung mit den im Anspruch 1 angegebenen Merkmalen sowie durch ein Verfahren mit den im Anspruch 9 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die vorliegende Erfindung auf dem Prinzip, dass eine Wurzelschutzgasströmung in Richtung entlang der Wurzelseite des zu fügenden Bereichs, insbesondere
- in axialer Richtung zum Gegenstand und/oder
- in einer Ebene im Wesentlichen parallel zum zu fügenden Bereich des Gegenstands,
beispielsweise entlang der Innenwand des zu fügenden Rohrs, geführt wird.

Das Wurzelschutzgas strömt also gerichtet entlang einer (im Prinzip in beliebiger Weise geformten) Oberfläche des Gegenstands, beispielsweise längs und/oder quer zur Naht. Die vorliegende Erfindung grenzt sich somit gegenüber dem Stand der Technik dadurch ab, dass das Wurzelschutzgas nicht turbulent und nicht auf die Naht bzw. auf die Wurzelseite zu, also nicht radial oder normal zur Naht bzw. zur Wurzelseite. Dabei strömt das Wurzelschutzgas in beliebiger Richtung in Bezug auf die Naht; es kann also längs und /oder quer zur Naht strömen. Vorteilhafterweise wird es dabei eine komponente quer zur Naht aufweisen.

Diese gerichtete Wurzelschutzgasströmung bewirkt, dass eventuell aus dem Grundwerkstoff des Gegenstands, beispielsweise aus dem Rohrmaterial, austretende Dämpfe von der Fügestelle bzw. vom zu fügenden Bereich weggeführt werden, so dass sich diese Dämpfe nicht im Bereich der Naht ablagern können. Die Erfindung gewährleistet somit eine metallisch blanke Nahtausbildung ohne jegliche Verfärbung, also ohne Anlauffarben (Chromoxide) und ohne Verfärbungen und Belägen.

Vermutlich handelt es sich bei den Verfärbungen um frühausdampfende Materialbestandteile bzw. Ausgasungen aus dem Grundwerkstoff, die an den kälteren Oberflächen kondensieren und besagte Verfärbungen bzw. Beläge bilden. Diese werden mit der vorliegenden Erfindung unterbunden, so dass blanke Nähte entstehen.

Hierzu wird das beim Formieren zugeführte Wurzelschutzgas mittels mindestens einer Wurzelschutzgasleiteinrichtung bzw. mittels mindestens einer geelgneten Konstruktion der Formiervorrichtung im zu fügenden Bereich auf der Wurzelseite In Richtung entlang der Wurzelseite gelenkt. Vorteilhafterweise kann das Wurzelschutzgas in axialer Richtung zum Gegenstand, insbesondere in axialer Richtung zum zu fügenden Bereich, gelenkt werden.

Bei Gegenständen, die keine Achse aufweisen, wird das Wurzelschutzgas vorteilhafterweise zumindest im Bereich der Wurzelseite in einer Ebene parallel zum zu fügenden Bereich des Gegenstands gelenkt. Entscheidend ist dabei, dass das Wurzelschutzgas entlang der Naht strömt, nicht aber auf die Naht zu. Das Entlangströmen kann dabei sowohl längs zur Naht als auch quer zur Naht als auch in einer Mischung aus längs und quer zur Naht erfolgen. Zwischen Wurzelschutzgasleiteinrichtung und Gegenstand entsteht somit vorteilhafterweise ein Spalt, durch den das Wurzelschutzgas der Spaltrichtung folgend strömen kann.

Bei der vorliegenden Vorrichtung wie auch beim vorliegenden Verfahren wird im Gegensatz zu konventionellen Formiervorrichtungen bzw. zu konventionellen Formierverfahren eine absolut anlauffarbenfreie und belagfreie Nahtwurzel erzielt, und zwar selbst unter ungünstigen Bedingungen, wie zum Beispiel beim Schweißen mit einem großen zu fügenden Bereich bzw. mit einem breiten Fügespalt.

Erfindungsgemäß wird die Wurzelschutzgasströmung nahe am zu fügenden Bereich, insbesondere nahe an der zu fügenden Rohrwand, vorbei gelenkt. Hierzu ist die Wurzelschutzgasleiteinrichtung mit geringem Abstand zum zu fügenden Gegenstand bzw. zum zu fügenden Bereich angeordnet. Der Abstand zwischen Gegenstand und Wurzelschutzgasleiteinrichtung beträgt bis zu etwa sieben Millimeter, vorzugsweise bis zu etwa fünf Millimeter und besonders bevorzugt bis zu etwa drei Millimeter. Der Abstand ist dabei vorteilhafterweise so gering wie möglich zu wählen, jedoch muss noch genügend Platz für die Nahtwurzel verbleiben.

Auf diese Weise kann das Wurzelschutzgas durch einen zwischen dem Gegenstand und der Wurzelschutzgasleiteinrichtung gebildeten Wurzelschutzgasführungsspalt geleitet werden. Je schmaler der Wurzelschutzgasführungsspalt ist, desto schneller strömt das Wurzelschutzgas am zu fügenden Bereich vorbei und entfernt die austretenden Dämpfe.

In einer vorteilhaften Ausgestaltung ist die Wurzelschutzgasleiteinrichtung zum Führen oder zum Lenken des zugeführten Wurzelschutzgases zumindest im zu fügenden Bereich auf der Wurzelseite derartig angebracht das Wurzelschutzgas entlang der Oberfläche des Gegenstands strömt und dabei die Naht an der Wurzelseite überstreicht. Es wird also ein Wurzelschutzgasführungsspalt geschaffen, durch welchen das Wurzelschutzgas strömt. Die Naht selbst kann dabei längs oder quer oder in einer Kombination aus längs oder quer überstrichen werden. Ist der zu fügende Gegenstand zumindest im zu fügenden Bereich eben, so ist die Wurzelschutzgasleiteinrichtung vorteilhafterweise parallel zum Gegenstand angeordnet. Das Wurzelschutzgas strömt durch den Spalt und weist eine Strömungsrichtung auf, die längs, quer oder eine Mischung aus längs und quer zur Naht ist. Beispielsweise kann die Wurzelschutzgasleiteinrichtung bei einem Blech ein parallel zum zu fügenden Bereich angeordnetes Blech sein. Als Hilfsmittel zum parallelen Anordnen der Wurzelschutzgasleiteinrichtung kann die Wurzelschutzgasleiteinrichtung mittels mindestens eines Befestigungselements ausgerichtet und/oder gehalten werden. Auch bei komplizierten Gegenständen ist es möglich ein Wurzelschutzgas entlang der Wurzelseite strömen zu lassen. Die Strömung erfolgt dabei längs und/oder quer zur Fügenaht. Die erfindungsgemäße Formiervorrichtung ist dazu derartig ausgestaltet, dass zwischen Wurzelschutzgasleiteinrichtung und Werkstück einen Spalt geschaffen wird, durch welchen das Wurzelschutzgas an der Wurzelseite entlang strömt. Die Spaltbreite ist dabei vorteilhafterweise möglichst konstant zu halten, damit eine gleichmäßige Strömung entsteht.

In einer besonders vorteilhaften Ausgestaltung ist die Wurzelschutzgasleiteinrichtung zum Führen oder zum Lenken des zugeführten Wurzelschutzgases zumindest im Bereich der Wurzelseite in axialer Richtung des Gegenstands angeordnet. Vorteilhafterweise ist der zu fügende Gegenstand ein, beispielsweise aus nichtrostendem Stahl gebildetes, Rohr. Hierbei ist die Wurzelseite des zu fügenden Bereichs an der Innenwand des Rohrs angeordnet. Vorteilhafterweise ist bei diesem Ausführungsbeispiel die Wurzelschutzgasleiteinrichtung dazu ausgebildet, das Wurzelschutzgas mit wandnaher axialer Strömung an der Wurzelseite vorbeizuleiten. Zu diesem Zweck ist die Wurzelschutzgasleiteinrichtung bis zu etwa sieben Millimeter, vorzugsweise bis zu etwa fünf Millimeter und besonders bevorzugt bis etwa drei Millimeter, zur Innenwand des Rohrs beabstandet.

Die Wurzelschutzgasleiteinrichtung kann kreisförmig, beispielsweise scheibenartig, ausgebildet sein. Alternativ kann die Wurzelschutzgasleiteinrichtung auch nach Art eines Zylinders oder Bechers geformt sein. Vorteilhafterweise wird die Wurzelschutzgasleiteinrichtung, beispielsweise mittels des Zentrierelements, zentriert im Rohr angeordnet.

In einer weiteren Ausgestaltungsform der vorliegenden Erfindung wird die Wurzelschutzgasleiteinrichtung mittels mindestens einer Kühleinrichtung gekühlt, beispielsweise wassergekühlt. Die gekühlte Wurzelschutzgasleiteinrichtung kann einer besonders hohen Temperaturbelastung widerstehen, wie sie zum Beispiel auftreten kann, wenn die Wurzelschutzgasführungseinrichtung besonders nah an den zu fügenden Bereich, etwa an die Rohrwandung, heran gelegt wird, um noch bessere Schutzwirkung durch den axialen Wurzelschutzgasstrom zu erhalten.

Die vorliegende Erfindung betrifft des Weiteren eine Wurzelschutzgasleiteinrichtung zum Führen oder zum Lenken von mittels einer Formiervorrichtung gemäß der vorstehend dargelegten Art zugeführtem Wurzelschutzgas in Richtung entlang der Wurzelseite des zu fügenden Bereichs, insbesondere in axialer Richtung zum Gegenstand und/oder in Richtung einer Ebene im Wesentlichen parallel zum zu fügenden Bereich des Gegenstands.

Die vorliegende Erfindung betrifft schließlich die Verwendung mindestens eines Wurzelschutzgases zum Fügen mindestens eines Gegenstands aus nichtrostendem Stahl mittels der Methode des Schweißens, insbesondere des Lichtbogenschweißens und/oder des Lichtbogenlötens unter Einsatz mindestens einer Formlervorrichtung gemäß der vorstehend dargelegten Art und/oder eines Verfahrens gemäß der vorstehend dargelegten Art.

Insbesondere betrifft die vorliegende Erfindung die Verwendung mindestens eines Wurzelschutzgases beim Fügen.

Als Wurzelschutzgas können insbesondere Argon oder Stickstoff oder mindestens ein anderes reaktionsträges Gas, sowie Gemische aus Stickstoff und Wasserstoff (Formiergase nach DIN EN 439) oder Argon und Wasserstoff oder andere inerte oder reaktionsträge Gasgemische, wie etwa Argon und/oder Stickstoff und/oder Wasserstoff eingesetzt werden.

### Kurze Beschreibung der Zeichnungen

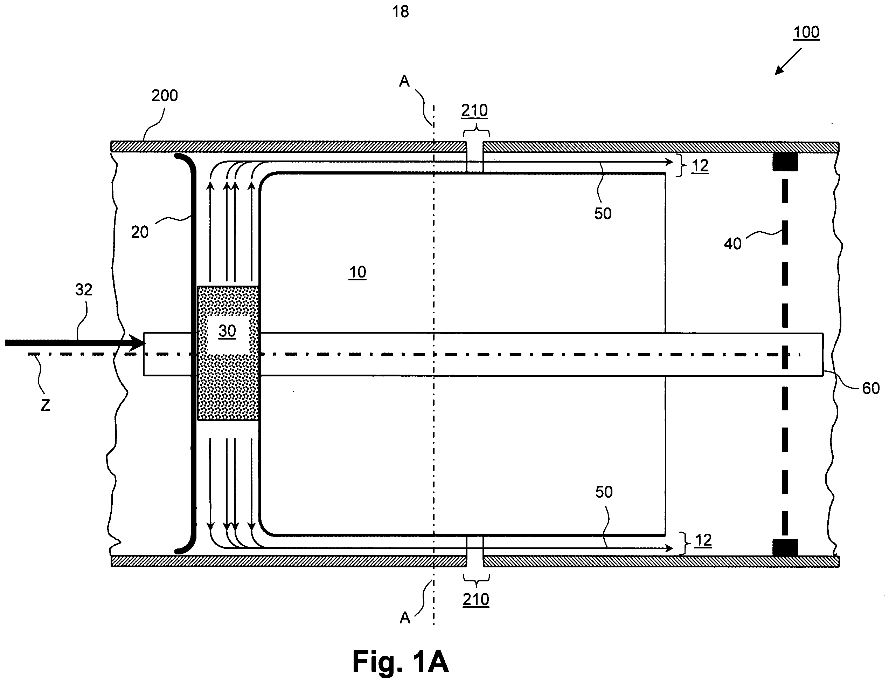

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 9 nachgeordneten Ansprüche verwiesen, andererseits werden weitere Ausgestaltungen, Merkmale und Vorteile der vorliegenden Erfindung nachstehend unter Anderem anhand der beiden durch die Fig. 1A bis Fig. 2 veranschaulichten Ausführungsbeispiele näher erläutert.

Es zeigt:
- Fig. 1A: in schematischer Längsschnittdarstellung ein erstes Ausführungsbeispiel einer Formiervorrichtung gemäß der vorliegenden Erfindung, die nach dem Verfahren gemäß der vorliegenden Erfindung arbeitet;

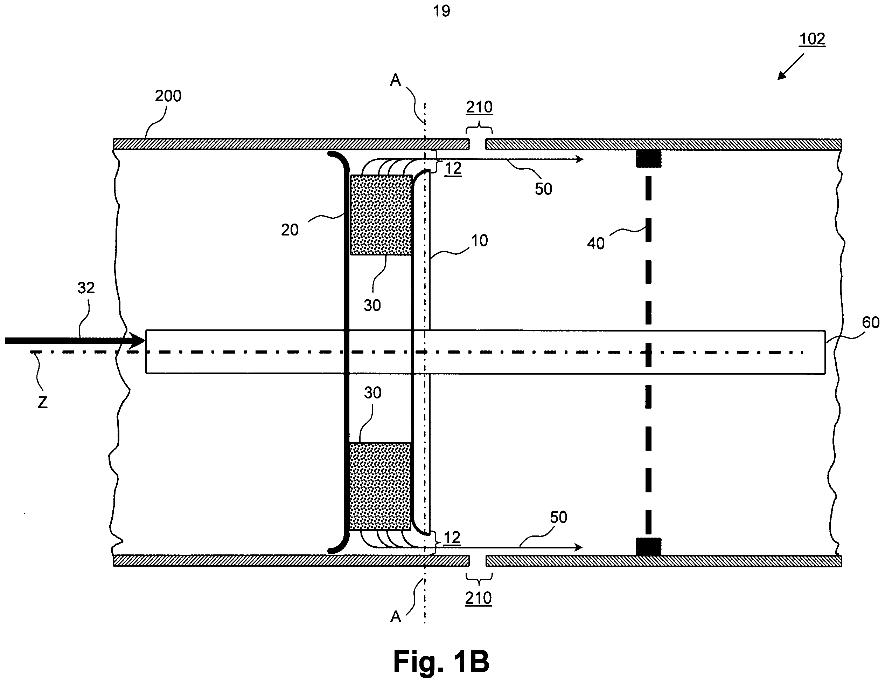

- Fig. 1B: in schematischer Längsschnittdarstellung ein zweites Ausführungsbeispiel einer Formiervorrichtung gemäß der vorliegenden Erfindung, die nach dem Verfahren gemäß der vorliegenden Erfindung arbeitet;

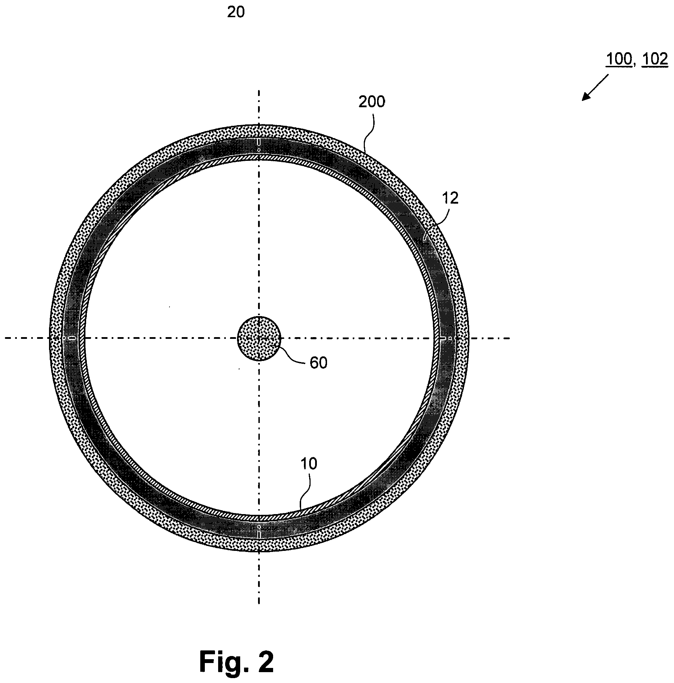

- Fig. 2: eine schematische Querschnittdarstellung der Formiervorrichtung aus Fig. 1A bzw. aus Fig. 1 B;
- Fig. 3: in schematischer Längsschnittdarstellung ein erstes Ausführungsbeispiel einer Formiervorrichtung aus dem Stand der Technik;
- Fig. 4: in schematischer Längsschnittdarstellung ein zweites Ausführungsbeispiel einer Formiervorrichtung aus dem Stand der Technik; und
- Fig. 5: in schematischer Längsschnittdarstellung ein drittes Ausführungsbeispiel einer Formiervorrichtung aus dem Stand der Technik.

Gleiche oder ähnliche Ausgestaltungen, Elemente oder Merkmale sind in Fig. 1A bis Fig. 5 mit identischen Bezugszeichen versehen.

### Bester Weg zur Ausführung der vorliegenden Erfindung

Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben) sowohl auf das in Fig. 1A, Fig. 2 dargestellte erste Ausführungsbeispiel einer Formiervorrichtung 100 als auch auf das in Fig. 1B, Fig. 2 dargestellte zweite Ausführungsbeispiel einer Formiervorrichtung 102.

Die in Fig. 1A bis Fig. 5 dargestellten Formiervorrichtungen 100, 102, 100', 100" 100"' sind zum Zuführen eines Wurzelschutzgases zur Wurzelseite eines zu fügenden Bereichs 210 eines Gegenstands 200, nämlich eines Rohrs aus rostfreiem Stahl, ausgebildet.

Hierbei wird bei den in Fig. 3 bzw. in Fig. 4 bzw. in Fig. 5 dargestellten Ausführungsbeispielen einer Formiervorrichtung 100' bzw. 100" bzw. 100"' gemäß dem Stand der Technik entweder der zu spülende Raum komplett mit Wurzelschutzgas geflutet (vgl. Fig. 3) oder die Naht direkt in radialer Richtung mit dem Wurzelschutzgas beaufschlagt (vgl. Fig. 4 und Fig. 5). So ist in Fig. 3 eine konventionelle Formiervorrichtung 100' mit diffusem Gasstrom gezeigt.

In Fig. 4 bzw. in Fig. 5 sind konventionelle Formiervorrichtungen 100" bzw. 100"' mit radialem Wurzelschutzgasaustritt gezeigt. Beim in Fig. 5 dargestellten Ausführungsbeispiel einer Formiervorrichtung 100"' aus dem Stand der Technik erstreckt sich eine Wurzelschutzgaszuführeinrichtung 30, beispielsweise ein Schwamm aus Sintermetall, über die gesamte Länge des mittels Dichtelementen bzw. Dichtlippen 20 abgedichteten Rohrelements.

Im Vergleich zu den in Fig. 3 bzw. in Fig. 4 dargestellten Ausführungsbeispielen einer Formiervorrichtung 100' bzw. 100" aus dem Stand der Technik ist beim in Fig. 5 dargestellten Ausführungsbeispiel einer Formiervorrichtung 100"' aus dem Stand der Technik der Gasverbrauch deutlich geringer.

Allerdings können bei Verwendung der in Fig. 3 bzw. in Fig. 4 bzw. in Fig. 5 gezeigten konventionellen Formiervorrichtungen 100' bzw. 100" bzw. 100"' am gefügten Gegenstand gelblich-braune Verfärbungen und Beläge auftreten, die durch den Niederschlag von beim Fügen austretenden Dämpfen gebildet werden.

Bei den in Fig. 3 und in Fig. 4 dargestellten Ausführungsbeispielen aus dem Stand der Technik herrscht in Rohrwandnähe allenfalls nur eine sehr geringe und diffuse Wurzelschutzgasströmung. Beim Fügen austretende Dämpfe werden somit nicht vom Wurzelschutzgas weggeblasen. Beim in Fig. 5 dargestellten Ausführungsbeispiel aus dem Stand der Technik weist die diffuse Strömung eine radiale, auf die Rohrwand gerichtete Richtung auf.

Im Gegensatz zum Stand der Technik wird bei der vorliegenden Erfindung, beispielsweise bei den anhand Fig. 1A bis Fig. 2 dargestellten beiden Ausführungsbeispielen einer erfindungsgemäßen Formiervorrichtung 100, 102, das zugeführte Wurzelschutzgas in axialer Richtung des Gegenstands 200 bzw. in axialer Richtung zur Rohrwand geleitet. Beim Fügen austretende Dämpfe werden somit in effektiver Weise weggeleitet.

Bei den in Fig. 1A bis Fig. 2 dargestellten erfindungsgemäßen Ausführungsbeispielen 100, 102 wird das zugeführte Wurzelschutzgas mittels einer Wurzelschutzgasleiteinrichtung 10 derart gelenkt, dass eine axiale und wandnahe Gasströmung entsteht. Im Gegensatz zum Stand der Technik strömt das Wurzelschutzgas hierbei bei der vorliegenden Erfindung laminar durch die Formiervorrichtung 100, 102.

Die vorliegende Erfindung grenzt sich gegenüber dem Stand der Technik zusätzlich dadurch ab, dass gemäß einer vorteilhaften Ausführungsform die Formiervorrichtung 100, 102 lediglich im Bereich des Wurzelschutzgaszutritts 32, insbesondere der Wurzelschutzgaszuführeinrichtung 30, eine Dichtlippe 20 aufweist.

Im Bereich des Wurzelschutzgasaustritts 34 ist bei den in Fig. 1A bis Fig. 2 dargestellten Ausführungsbeispielen 100, 102 ein Zentrierelement 40 zum Zentrieren der Wurzelschutzgasleiteinrichtung 10 angeordnet. Da die Wurzelschutzgasleiteinrichtung 10 zentriert im Rohr 200 angeordnet ist, wird zwischen der Wurzelschutzgasleiteinrichtung 10 und der Rohrwand 200 ein gleichmäßiger Wurzelschutzgasführungsspalt 12 gebildet. Das Zentrierelement 40 ist vorteilhafterweise gasdurchlässig, damit das axial strömende Wurzelschutzgas ungehindert aus der Formiervorrichtung 100, 102 austreten kann und damit keine Turbulenzen in der Formiervorrichtung 100, 102 entstehen.

Wie aus Fig. 1A und aus Fig. 1B ersichtlich, kann das Wurzelschutzgas mittels einer Wurzelschutzgaszuführeinrichtung 30 zentriert oder mittels mehrerer Wurzelschutzgaszuführeinrichtungen 30 an zwei oder mehr Stellen zugeführt werden. Wichtig ist lediglich, dass das Wurzelschutzgas mittels der Wurzelschutzgasführung 10 derart geleitet wird, dass es axial an der Wand des Rohrs entlang strömt.

Hierzu kann die Wurzelschutzgasführung 10 beispielsweise nach Art eines Bechers oder nach Art eines Zylinders ausgebildet sein und einen langen Wurzelschutzgasführungsspalt 12 bilden (vgl. Fig. 1A); beispielsweise kann die Wurzelschutzgasführung 10 eine Länge von etwa 17 Zentimetern aufweisen.

Alternativ, beispielsweise bei kurzen Rohrleitungen, kann die Wurzelschutzgasführung 10 aber auch relativ kurz, beispielsweise scheiben- oder tellerförmig, ausgebildet sein (vgl. Fig. 1B).

Die in Fig. 1A bis Fig. 2 dargestellte Formiervorrichtung 100, 102 ist zum Einsatz in einem geraden Rohr 200 gedacht. Gemäß einer vorteilhaften Weiterbildung der vorliegenden Erfindung kann die Formiervorrichtung aber auch zum Einsatz in einem gebogenen oder gekrümmten Rohr bzw. Rohrteil ausgebildet sein. Wichtig ist vor allem, dass eine wandnahe axiale Strömung des Wurzelschutzgases erreicht wird.

Fig. 2 zeigt eine schematische Schnittansicht der Formiervorrichtung 100, 102 entlang der in Fig. 1A und in Fig. 1B eingezeichneten Schnittlinie A-A.

Versuchsergebnisse haben gezeigt, dass bei Einsatz der erfindungsgemäßen Formiervorrichtung 100, 102 bei Bearbeitung desselben Grundmaterials (--> ein Einfluss des Grundwerkstoffs kann also ausgeschlossen werden) sich gewissermaßen keine Verfärbungen oder Beläge bilden, wohingegen bei Einsatz konventioneller Formiervorrichtungen 100', 100", 100"' neben der Fügenaht deutliche gelb-braune Verfärbungen auftreten.

### Bezugszeichenliste

- 100: Formiervorrichtung gemäß vorliegender Erfindung
(= erstes Ausführungsbeispiel; vgl. Fig. 1A, Fig. 2)
- 102: Formiervorrichtung gemäß vorliegender Erfindung
(= zweites Ausführungsbeispiel; vgl. Fig. 1B, Fig. 2)
- 100': Formiervorrichtung gemäß Stand der Technik
(= erstes Ausführungsbeispiel; vgl. Fig. 3)
- 100": Formiervorrichtung gemäß Stand der Technik
(= zweites Ausführungsbeispiel; vgl. Fig. 4)
- 100"': Formiervorrichtung gemäß Stand der Technik
(= drittes Ausführungsbeispiel; vgl. Fig. 5)
- 10: Wurzelschutzgasleiteinrichtung, insbesondere Wurzelschutzgasführung, beispielsweise aus Stahlblech
- 12: Wurzelschutzgasführungsspalt zwischen Gegenstand 200 und Wurzelschutzgasleiteinrichtung 10
- 20: Dichtelement, insbesondere Dichtlippe
- 30: Wurzelschutzgaszuführeinrichtung, insbesondere Diffusor, beispielsweise Sintermetall
- 32: Wurzelschutzgaszutritt
- 34: Wurzelschutzgasaustritt
- 40: Zentrierelement
- 50: Richtung der Strömung des Wurzelschutzgases und/oder Richtung entlang der Wurzelseite des zu fügenden Bereichs 210, insbesondere axiale Richtung des Gegenstands 200 und/oder Ebene im Wesentlichen parallel zum zu fügenden Bereich 210 des Gegenstands 200
- 60: Führungselement, insbesondere zum Führen der Wurzelschutzgasleiteinrichtung 10, des Dichtelements 20, der Wurzelschutzgaszuführeinrichtung 30 und/oder des Zentrierelements 50
- 200: zu fügender Gegenstand, insbesondere zu fügendes Rohr, zum Beispiel aus nichtrostendem Stahl
- 210: zu fügender, insbesondere zu schweißender und/oder zu lötender, Bereich des Gegenstands 200
- A: Schnittebene
- Z: zentrale Längsachse des Gegenstands 200

## Patentansprüche

1. Formiervorrichtung (100; 102) zum Zuführen mindestens eines Wurzelschutzgases zur Wurzelseite mindestens eines zu fügenden Bereichs (210) mindestens eines Gegenstands (200), *wobei die Formiervorrichtung (100; 102)* mindestens eine Wurzelschutzgasleiteinrichtung (10) zum Führen oder zum Lenken des zugeführten Wurzelschutzgases in Richtung (50) entlang der Wurzelseite des zu fügenden Bereichs (210) *aufweist,* wobei der Gegenstand (200) ein Rohr ist und die Wurzelseite des zu fügenden Bereichs (210) an der Innenwand des Rohrs (200) angeordnet ist, wobei die Wurzelschutzgasleiteinrichtung (10) dazu ausgebildet ist, das zugeführte Wurzelschutzgas im Bereich der Wurzelseite entlang der Innenwand des Rohrs (200) zu leiten.
**dadurch gekennzeichnet,**
***dass*** die Formiervorrichtung mindestens ein in das Rohr einsetzbares Dichtelement (20) zum Abdichten des zugeführten Wurzelschutzgases gegenüber der Umgebung des Rohrs (200) aufweist, und dass *der Abstand zwischen der Wurzelschutzgasleiteinrichtung (10) und dem Gegenstand (200) bis zu etwa sieben Millimeter, insbesondere bis zu etwa fünf Millimeter, zum Beispiel bis zu etwa drei Millimeter, beträgt.*

2. Formiervorrichtung gemäß Anspruch 1, **dadurch gekennzeichnet, dass** die Richtung (50) entlang der Wurzelseite des zu fügenden Bereichs (210)
- in axialer Richtung des Gegenstands (200) und/oder
- in einer Ebene im Wesentlichen parallel zum zu fügenden Bereich (210) des Gegenstands (200)
verläuft.

3. Formiervorrichtung gemäß Anspruch 1 oder 2, **dadurch gekennzeichnet, dass** die Wurzelschutzgasleiteinrichtung (10)
- zum zu fügenden Gegenstand (200), insbesondere gleichmäßig, beabstandet ist und
- dazu ausgebildet ist, das Wurzelschutzgas durch einen zwischen dem Gegenstand (200) und der Wurzelschutzgasleiteinrichtung (10) gebildeten Wurzelschutzgasführungsspalt (12) zu leiten, insbesondere am zu fügenden Bereich (210) im Wesentlichen parallel zum Gegenstand (200) angeordnet ist.

4. Formiervorrichtung gemäß mindestens einem der Ansprüche 1 bis 3, **dadurch gekennzeichnet, dass** die Wurzelschutzgasleiteinrichtung (10)
- kreisförmig und nach Art eines Zylinders oder Bechers geformt ist und/oder
- zentriert in das Rohr (200) einsetzbar ist.

5. Formiervorrichtung gemäß mindestens einem der Ansprüche 1 bis 4, **gekennzeichnet durch**
- mindestens ein in das Rohr (200) einsetzbares, insbesondere gasdurchlässiges, Zentrierelement (40) zum Zentrieren der Wurzelschutzgasleiteinrichtung (10).

6. Formiervorrichtung gemäß mindestens einem der Ansprüche 1 bis 6, **gekennzeichnet durch** mindestens eine, insbesondere zwischen dem Dichtelement (20) und der Wurzelschutzgasleiteinrichtung (10) angeordnete, Wurzelschutzgaszuführeinrichtung (30), insbesondere **durch** mindestens einen Diffusor, zum Zuführen des Wurzelschutzgases, wobei die Wurzelschutzgaszuführeinrichtung (30) mit der Wurzelschutzgasleiteinrichtung (10) derart zusammenwirkt, dass das zugeführte Wurzelschutzgas zumindest im Bereich der Wurzelseite in Richtung (50) entlang der Wurzelseite des zu fügenden Bereichs (210) geleitet wird.

7. Formiervorrichtung gemäß mindestens einem der Ansprüche 1 bis 7, **gekennzeichnet durch** mindestens eine Kühleinrichtung zum Kühlen der Wurzelschutzgasleiteinrichtung (10), insbesondere mittels Wasser.

8. Verfahren zum Formieren oder zum Zuführen mindestens eines Wurzelschutzgases zur Wurzelseite mindestens eines zu fügenden Bereichs (210) mindestens eines Rohrs, mittels einer Vorrichtung gemäß Anspruch 1, (200), *wobei* das zugeführte Wurzelschutzgas in Richtung (50) entlang der Wurzelseite des zu fügenden Bereichs (210) geleitet, geführt oder gelenkt wird,
**dadurch gekennzeichnet,**
***dass*** *der Abstand zwischen der Wurzelschutzgasleiteinrichtung (10) und dem* Rohr *(200) bis zu etwa sieben Millimeter, insbesondere bis zu etwa fünf Millimeter, zum Beispiel bis zu etwa drei Millimeter, beträgt.*

9. Verfahren gemäß Anspruch 8, **dadurch gekennzeichnet, dass** das zugeführte Wurzelschutzgas zumindest im Bereich der Wurzelseite in axialer Richtung (50) des Gegenstands (200) und/oder in einer Ebene im Wesentlichen parallel zum zu fügenden Bereichs (210) des Gegenstands (200) geleitet, geführt oder gelenkt wird.

10. Verfahren gemäß Anspruch 8 oder 9, **dadurch gekennzeichnet, dass** als Wurzelschutzgas Argon, Stickstoff und/oder Wasserstoff verwendet werden.

11. Verwendung mindestens eines Wurzelschutzgases beim Fügen, insbesondere beim Lichtbogenschweißen und/oder Lichtbogenlöten, unter Einsatz mindestens einer Formiervorrichtung (100; 102) gemäß mindestens einem der Ansprüche 1 bis 7.

## Claims

1. Forming device (100; 102) for delivering at least one root shielding gas to the root side of at least one region (210) to be joined of at least one object (200), wherein the forming device (100; 102) has at least one root shielding gas directing device (10) for guiding or deflecting the delivered root shielding gas in the direction (50) along the root side of the region (210) to be joined, wherein the object (200) is a pipe and the root side of the region (210) to be joined is arranged on the inner wall of the pipe (200), wherein the root shielding gas directing device (10) is designed to direct the delivered root shielding gas in the region of the root side along the inner wall of the pipe (200), **characterized**
**in that** the forming device has at least one sealing element (20), which is insertable into the pipe and is intended for sealing the delivered root shielding gas from the surroundings of the pipe (200),
and **in that** the distance between the root shielding gas directing device (10) and the object (200) is up to approximately seven millimetres, in particular up to approximately five millimetres, for example up to approximately three millimetres.

2. Forming device according to Claim 1, **characterized in that** the direction (50) along the root side of the region (210) to be joined extends
- in the axial direction of the object (200) and/or
- in a plane essentially parallel to the region (210) to be joined of the object (200).

3. Forming device according to Claim 1 or 2, **characterized in that** the root shielding gas directing device (10)
- is spaced apart from the object (200) to be joined, in particular uniformly, and
- is designed for directing the root shielding gas through a root shielding gas guiding gap (12) formed between the object (200) and the root shielding gas directing device (10), in particular is arranged essentially parallel to the object (200) at the region (210) to be joined.

4. Forming device according to at least one of Claims 1 to 3, **characterized in that** the root shielding gas directing device (10)
- is circular and is formed in the manner of a cylinder or cup and/or
- is insertable into the pipe (200) in a centred fashion.

5. Forming device according to at least one of Claims 1 to 4, **characterized by**
- at least one, in particular gas-permeable, centring element (40) that is insertable into the pipe (200) and is intended for centring the root shielding gas directing device (10).

6. Forming device according to at least one of Claims 1 to 6, **characterized by** at least one root shielding gas delivery device (30), arranged in particular between the sealing element (20) and the root shielding gas directing device (10), in particular by at least one diffuser, for delivering the root shielding gas, wherein the root shielding gas delivery device (30) interacts with the root shielding gas directing device (10) in such a way that the delivered root shielding gas is directed in the direction (50) along the root side of the region (210) to be joined at least in the region of the root side.

7. Forming device according to at least one of Claims 1 to 7, **characterized by** at least one cooling device for cooling the root shielding gas directing device (10), in particular by means of water.

8. Method for forming or for delivering at least one root shielding gas to the root side of at least one region (210) to be joined of at least one pipe, by means of a device according to Claim 1, (200), wherein the delivered root shielding gas is directed, guided or deflected in the direction (50) along the root side of the region (210) to be joined,
**characterized**
**in that** the distance between the root shielding gas directing device (10) and the pipe (200) is up to approximately seven millimetres, in particular up to approximately five millimetres, for example up to approximately three millimetres.

9. Method according to Claim 8, **characterized in that** the delivered root shielding gas is directed, guided or deflected in the axial direction (50) of the object (200) and/or in a plane essentially parallel to the region (210) to be joined of the object (200) at least in the region of the root side.

10. Method according to Claim 8 or 9, **characterized in that** argon, nitrogen and/or hydrogen are used as the root shielding gas.

11. Use of at least one root shielding gas when joining, in particular when arc welding and/or arc brazing, by using at least one forming device (100; 102) according to at least one of Claims 1 to 7.

## Revendications

1. Dispositif de formage destiné à délivrer au moins un gaz de protection de racine destiné au côté racine d'au moins une région (103) à joindre d'au moins un objet (200), dans lequel le dispositif de formage (100 ; 102) comprend au moins un moyen de guidage de gaz de protection de racine (10) destiné à guider ou diriger le gaz de protection de racine délivré dans une direction (50) orientée le long du côté racine de la région (210) à joindre, dans lequel l'objet (200) est un tube et le côté racine de la région à joindre (210) est disposé sur la paroi interne du tube (200), dans lequel le moyen de guidage de gaz de protection de racine (10) est conçu pour guider le gaz de protection de racine délivré dans la région du côté racine le long de la paroi interne du tube (200),
**caractérisé en ce que** le dispositif de formage comporte au moins un élément d'étanchéité (20) pouvant être inséré dans le tube pour assurer l'étanchéifier le gaz de protection de racine délivré vis-à-vis de l'environnement du tube (200), et **en ce que** la distance entre le moyen de guidage de gaz de protection racine (10) et l'objet (20) est d'au plus environ sept millimètres, en particulier d'au plus environ cinq millimètres, et par exemple, d'au plus environ trois millimètres.

2. Dispositif de formage selon la revendication 1, **caractérisé en ce que** la direction (50) orientée le long du côté racine de la région à joindre (210) s'étend
- dans la direction radiale de l'objet (200) et/ou
- dans un plan sensiblement parallèle à la région à joindre (210) de l'objet (200).

3. Dispositif de formage selon la revendication 1 ou 2, **caractérisé en ce que** le moyen de guidage de protection de racine (10)
- est espacé de l'objet à joindre (200), notamment de manière régulière et
- est réalisé de manière à guider le gaz de protection de racine à travers une fente de guidage de gaz de protection de racine (12) formée entre l'objet (200) et le moyen de guidage de gaz de protection de racine (10), notamment dans la région à joindre (210) sensiblement parallèlement à l'objet (200).

4. Dispositif de formage selon au moins l'une des revendications 1 à 3, **caractérisé en ce que** le moyen de guidage de gaz de protection de racine (10)
- est formé de manière circulaire et à la façon d'un cylindre ou d'une coupelle et/ou
- peut être introduit dans le tube (200) de manière centrée.

5. Dispositif de formage selon au moins l'une des revendications 1 à 4, **caractérisé par**
- au moins un élément de centrage (40) pouvant être introduit dans le tube (20), notamment transparent, pour centrer le moyen de guidage de gaz de protection de racine (10).

6. Dispositif de formage selon au moins l'une des revendications 1 à 6, **caractérisé par** au moins un moyen de guidage de protection de racine (30) notamment disposé entre l'élément d'étanchéité (20) et l'élément de guidage de protection de racine (10), notamment par au moins un diffuseur destiné à délivrer le gaz de protection de racine, dans lequel le moyen de guidage de protection de racine (30) coopère avec le moyen de guidage de protection de racine (10) de manière à ce que le gaz de protection de racine délivré soit guidé au moins dans la région du côté racine, dans la direction (50) orientée le long du côté racine de la région (210) à joindre.

7. Dispositif de formage selon au moins des revendications 1 à 7, **caractérisé par** au moins un moyen de refroidissement destiné à refroidir le moyen de guidage de protection de racine (10), notamment au moyen d'eau.

8. Procédé de formage ou d'amenée d'un gaz de protection de racine vers le côté racine d'au moins une région à joindre (210) d'au moins un tube, au moyen d'un dispositif selon la revendication 1, (200), dans lequel le gaz de protection de racine délivré est guidé, dirigé ou dévié dans une direction (50) orientée le long du côté racine de la région à joindre (210), **caractérisé en ce que** la distance entre le moyen de guidage de protection de racine (10) et le tube (200) est d'au plus environ sept millimètres, en particulier, d'au plus environ cinq millimètres, et par exemple, d'au plus environ trois millimètres.

9. Procédé selon la revendication 8, **caractérisé en ce que** le gaz de protection de racine délivré est guidé, dirigé, ou dévié au moins dans la région du côté racine, dans la direction axiale (50) de l'objet (200) et/ou dans un plan sensiblement parallèle à la région à joindre (210) de l'objet (200).

10. Procédé selon la revendication 8 ou 9, **caractérisé en ce que** de l'argon, de l'azote et/ou de l'hydrogène est/sont utilisé(s) en tant que gaz de protection de racine.

11. Utilisation d'au moins gaz de protection de racine lors de la réalisation d'un joint, notamment lors d'un soudage à l'arc et/ou d'un brasage à l'arc, par utilisation d'au moins un dispositif de formage (100 ; 102) selon au moins l'une des revendications 1 à 7.
